# EUROPÄISCHE PATENTANMELDUNG

(11) **EP 3 173 885 A1**
(43) Veröffentlichungstag der Anmeldung: **31.05.2017**
(21) Anmeldenummer: 16161433.4
(22) Anmeldetag: 21.03.2016
(51) Int. Cl.: G05B 19/19

(54) **VERFAHREN UND STEUEREINRICHTUNG ZUR STEUERUNG EINER BEWEGUNG EINES LINEARANTRIEBS MIT MINDESTENS EINEM LÄUFER**

(30) Priorität: 24.11.2015 EP 15196041; 24.11.2015 EP 15196047; 24.11.2015 EP 15196077
(71) Anmelder: Siemens Aktiengesellschaft, 80333 München (DE)
(72) Erfinder: Rothe, Sven, 70806 Kornwestheim (DE); Hofmann, Chris, 70563 Stuttgart (DE); Gierden, Marco, 91085 Weisendorf (DE); Hennefelder, Thomas, 91484 Markt Sugenheim (DE); Jäntsch, Michael, 91052 Erlangen (DE); Spindler, Carsten, 07368 Remptendorf (DE)

(57) **Zusammenfassung**

Verfahren zur Steuerung einer Bewegung, Steuereinrichtung, Linearantrieb, Produktionsmaschine, Verpackungsmaschine und Computerprogrammprodukt

Die Erfindung betrifft ein Verfahren zur Steuerung einer Bewegung von zumindest einem Läufer (L) bei einem Linearantrieb (LA), eine Steuereinrichtung (SE), einen Linearantrieb (LA), eine Produktions- oder Verpackungsmaschine sowie ein Computerprogrammprodukt. Zur Vorgabe der Bewegung ist vorgesehen, dass ein Benutzer oder eine Maschinenstation den Bewegungsablauf (BA) der Steuereinrichtung (SE) vorgibt. Der vorgegebene Bewegungsablauf (BA) wird, insbesondere mit Hilfe des Computerprogrammproduktes, virtuellen Achsen (VA) zugeordnet. Die Aufteilung eines Bewegungsablaufes auf virtuelle Achsen (VA) erfolgt vorteilhaft automatisch. Die virtuellen Achsen (VA) werden in einem weiteren Schritt realen Achsen (RA) zugeordnet. Eine Steuereinheit (U), insbesondere ein Umrichter, steuert die Bewegung des Läufers (L) auf dem Segment (Seg) des Linearantriebs (LA). Die Steuereinheit (U) versorgt zumindest ein Segment (Seg) mit elektrischer Spannung bzw. Strom. Die Segmente (Seg) als Teil des Linearantriebs (LA) bewegen somit die Läufer (L) anhand der Vorgaben des Bewegungsablaufs (BA). Vorteilhaft erfolgt eine solche Zuordnung automatisiert und der Benutzer wird bei der Vorgabe des Bewegungsablaufs (BA) entlastet.

## Beschreibung

Die Erfindung betrifft ein Verfahren zur Steuerung einer Bewegung und eine Steuereinrichtung. Weiter betrifft die Erfindung einen Linearantrieb, eine Verpackungsmaschine, eine Produktionsmaschine und ein Computerprogrammprodukt.

Transportsysteme, insbesondere Linearantriebe werden heute verbreitet in der Fertigung und Verpackung sowie zum Transport von Gütern eingesetzt. Moderne Transportsysteme weisen heute Bereiche auf, die mehrere, nacheinander angeordnete Statoren von Linearmotoren umfassen. Bei einem Linearantrieb ist oft eine Mehrzahl von Statoren von Linearmotoren aneinander angrenzend angeordnet. Die Statoren werden auch als Segmente bezeichnet. Linearantriebe weisen mit anderen Worten sequenziell aufeinander folgende Segmente auf. Die Segmente können durch jeweils eine Steuereinheit, aufweisend einen Stromverstärker oder einen Stromrichter, angesteuert und/oder mit Strom bzw. Spannung versorgt werden. Die Segmente dienen zur Bewegung von Läufern, die auf den Segmenten positioniert werden.

In herkömmlichen Linearantrieben dienen die Läufer zum Transport der Güter. Die Güter werden in der Regel zu Maschinenstationen hingeführt oder von Maschinenstationen weggeführt.

Aus DE 10 2008 008 602 A1 ist ein System bekannt, bei dem jedem Abschnitt jeweils ein Frequenzumrichter und die zugehörige Umrichtersteuerung zugeordnet sind. Die den unmittelbar benachbarten Abschnitten zugeordneten Steuereinrichtungen können miteinander kommunizieren. Insbesondere kann zum Zweck der Übergabe eines transportierten Elements von einem Abschnitt zum nächsten Abschnitt die eine Steuereinrichtung zum Master und die andere Steuereinrichtung zum Slave gemacht werden.

Es ist Aufgabe der Erfindung, die Erstellung von Bewegungsabläufen in einem solchen Transportsystem, insbesondere dem Linearantrieb, zu vereinfachen.

Die Aufgabe wird durch ein Verfahren nach einem der Ansprüche 1 oder 2 gelöst.

Die Aufgabe wird weiter durch eine Steuereinrichtung nach Anspruch 13, einen Linearantrieb nach Anspruch 16 sowie durch ein Computerprogrammprodukt gemäß Anspruch 15 gelöst.

Die Aufgabe wird weiter durch eine Verpackungsmaschine, eine Werkzeugmaschine oder eine Produktionsmaschine gemäß Anspruch 17 gelöst.

Vorteilhafte Ausgestaltungen und Weiterbildungen der Erfindung sind Gegenstand der abhängigen Ansprüche.

Bei dem Verfahren zur Steuerung einer Bewegung von zumindest einem Läufer eines Linearantriebs ist vorgesehen, dass der Linearantrieb zumindest ein Segment und den Läufer aufweist, wobei das Verfahren zumindest folgende Schritte umfasst:
- Vorgabe eines Bewegungsablaufes des Läufers,
- Transformation des Bewegungsablaufes des Läufers in eine Vorgabe für eine virtuelle Achse,
- Überführung der Vorgabe der virtuellen Achse in eine Vorgabe für eine reale Achse oder in eine Vorgabe für mehrere reale Achsen, wobei die Vorgabe für die zumindest eine reale Achse einer Steuereinheit bereitgestellt wird und wobei die Steuereinheit anhand der Vorgabe die Bewegung des Läufers auf dem Segment steuert.

Weiter dient zur Lösung der Aufgabe ein Verfahren zur Steuerung und/oder Regelung einer Bewegung von Läufern in einem Linearantrieb, wobei der Linearantrieb zum Transport von Gütern oder Produkten in einer Maschinenstation oder von einer Maschinenstation zu einer weiteren Maschinenstation ausgebildet ist, wobei zur Bewegung der Läufer Segmente vorgesehen sind, wobei eine Steuereinrichtung zur Steuerung oder Regelung der Bewegung der Läufer auf den Segmenten ausgebildet ist, wobei der Linearantrieb in der Steuereinrichtung durch folgende Zuordnungen ausgebildet ist:
- der jeweiligen, insbesondere realen, Maschinenstation ist jeweils eine, insbesondere virtuelle, Station zugeordnet,
- dem jeweiligen Läufer ist eine virtuelle Achse zugeordnet,
- dem jeweiligen Segment ist eine reale Achse zugeordnet, wobei das Verfahren folgende Verfahrensschritte umfasst:
- Vorgabe eines Bewegungsprofils für die jeweilige Station,
- Vorgabe von Eingangsbedingungen, insbesondere einer vorgesehenen Anzahl von virtuellen Achsen für die jeweilige Station
- Vorgabe einer Abfolge/Position von realen Achsen,
- Steuerung oder Regelung der Läufer des Linearantriebs, wobei die Segmente anhand von Vorgaben der realen Achsen geregelt werden, wobei die realen Achsen aus der jeweiligen virtuellen Achse ermittelt werden, wobei die jeweilige virtuelle Achse aus dem jeweiligen Bewegungsprofil der Station und/oder der Abfolge des der durchlaufenen Stationen ermittelt wird,
wobei die Abfolge der Stationen
- für einen Läufer vorgegeben sein kann,
- und/oder sich derart ergibt, dass die virtuelle Achse dann einer Station zugeordnet wird, wenn die Station zur Aufnahme einer vorgesehenen Anzahl von virtuellen Achsen bereit ist und die vorgesehene Anzahl von virtuellen Achsen für die Station zur Verfügung steht,
wobei die virtuellen Achsen, insbesondere gemäß einer vorgegebenen Reihenfolge, jeweils nacheinander den vorgegebenen Stationen zugeordnet werden.

Vorteilhaft wird der Bewegungsablauf mit Hilfe eines Projektgenerators oder einem Engineering-Programm erstellt. Der Bewegungsablauf kann für eine Steuereinheit des Linearantriebs bereitgestellt werden. Der Bewegungsablauf kann auch laufend neu anhand des Betriebszustandes des Linearantriebs angepasst oder erstellt werden. Hierbei erfolgt eine Bereitstellung des Bewegungsablaufs durch die Bewegungssteuerung selbst.

Der Läufer kann Permanentmagnete an seiner Unterseite aufweisen. Der Läufer weist auf seiner Oberseite vorteilhaft Befestigungsmittel für ein Werkstück oder ein Gut auf. Der Läufer wird durch ein Magnetfeld (oder ein elektrisches Feld) in seiner Position auf dem Segment verändert. Das Segment kann auch als Stator eines Symplex-Linearmotor-Stator ausgebildet sein.

Das Segment weist Spulen auf. Das Segment kann analog einem Stator eines Linearmotors aufgebaut sein. Die Spulen dienen zur Erzeugung eines Magnetfeldes mit dem Strom aus der Steuereinheit.

Der Linearantrieb, insbesondere die Läufer auf den Segmenten, ist dazu ausgebildet, Güter oder Werkstücke von einer Stelle zu einer anderen Stelle zu transportieren. Vorteilhaft dient ein Linearantrieb zum Transport von Werkstücken oder von Gütern von einer Maschinenstation zu einer anderen Maschinenstation.

Die Erfindung kann beispielsweise bei einer Abfüllanlage, einer Bearbeitungsmaschine, einer Verpackungsmaschine, einer Etikettiermaschine, einer Verpackungsmaschine oder einer Werkzeugmaschine eingesetzt werden. Die vorstehenden Beispiele dienen zur Modifikation des Werkstücks oder des Gutes. Das Werkstück oder das Gut ist auf dem Läufer befestigt. Der Läufer wird vorteilhaft durch die Maschinenstation hindurch bewegt.

Zur Planung von Abläufen in Maschinenstationen wird eine Zuführung und Abführung von Werkstücken oder Gütern gemäß einer zeitlichen Vorgabe benötigt. Die Bewegung der Läufer auf den Segmenten wird durch einen Bewegungsablauf beschrieben.

Vorteilhaft reicht der Linearantrieb ein Werkstück oder ein Gut, insbesondere auf zumindest einem Läufer, in die Maschinen hinein oder durch die Maschinenstation durch. Die Maschinenstation und der Linearantrieb können dabei derart gekoppelt sein, dass einzelne Segmente oder Teile von Segmenten im Einflussbereich der Maschinenstation stehen. Der Linearantrieb kann Teil der jeweiligen Maschinenstation sein. Im Rahmen der Programmierung eines Bewegungsablaufs kann die Maschinenstation als Station (=virtuelle Maschine, hier auch als Station bezeichnet) in dem o. g. Computerprogrammprodukt ausgeführt sein.

Eine Maschinenstation kann zumindest einen Teil des Bewegungsablaufs vorgeben. Einer Maschinenstation sowie der Station kann ein Bewegungsprofil zugeordnet werden. Ein Bewegungsprofil gibt an, wie der eine Läufer oder eine Mehrzahl von Läufern in der Maschinenstation bewegt wird bzw. werden.

Ein Bewegungsablauf gibt die Bewegung eines Läufers oder mehrerer Läufer auf einem Segment oder über mehrere Segmente hinweg vor.

In einer Ausgestaltung kann ein Bewegungsablauf als Abhängigkeit der Position eines Läufers von der Zeit vorgegeben werden.

In einer vorteilhaften Ausgestaltung kann ein Bewegungsablauf jedoch auch durch Positionen vorgegeben sein, die ein oder mehrere Läufer nacheinander einnehmen soll bzw. sollen. Optional können Randbedingungen wie eine maximale Beschleunigung oder ein maximaler Ruck der Läufer vorgegeben sein. Die Randbedingungen finden Eingang in die Ermittlung des Bewegungsablaufs der Läufer.

Alternativ kann ein Bewegungsablauf auch durch eine zeitliche Abfolge von Positionen oder Geschwindigkeiten eines Läufers oder mehrerer Läufer auf einem Segment oder einer Mehrzahl von Segmenten vorgegeben sein.

Die Vorgabe eines Bewegungsablaufs erfolgt durch einen Benutzer und/oder durch eine Maschinenstation. Ein Benutzer kann einen Bewegungsablauf mit Hilfe einer graphischen Benutzeroberfläche und/oder einer Hochsprache vorgeben oder programmieren. Als Hochsprache eignet sich ggf. auch eine Skriptsprache. Unter einer Hochsprache kann eine dem Problem angepasste Sprache zur Bestimmung eines Bewegungsablaufs vorgegeben sein. Eine Hochsprache zeichnet sich insbesondere durch Befehle aus, die mittels einer geeigneten Parametrierung geeignet sind, einen Bewegungsablauf vorzugeben.

In einer alternativen Ausgestaltung kann eine Vorgabe des Bewegungsablaufs ebenso durch Randbedingungen der Bewegung eines Läufers als Funktion eines weiteren Läufers erfolgen, wobei die Bewegungsvorgabe durch ein Software-Modul, insbesondere einen Projektgenerator, berechnet wird.

Die Übergabe der Läufer von einer Maschinenstation zu einer weiteren Maschinenstation erfolgt mit Hilfe eines Übertragungsverfahrens (Hand-Shake-Verfahren).

Das Übertragungsverfahren weist folgende Schritte auf:
- Eine Maschinenstation nimmt eine vorgesehene Anzahl Läufer auf.
- Dem jeweiligen, aufgenommenen Läufer ist nach der Aufnahme eine Kennung/Adresse zugeordnet.
- Die Läufer sind nach der Aufnahme durch die Maschinenstation im Einflussbereich der jeweiligen Maschinenstation MS1, MS2.
- Die Läufer führen in dem Einflussbereich der jeweiligen Maschinenstation eine Bewegung anhand des Bewegungsprofils aus.
- Nach Ausführung der Bewegung gibt die Maschinenstation die Läufer wieder aus.
- Die Läufer verlassen den Einflussbereich der Maschinenstation.

Der Bewegungsablauf kann auch während des Betriebs des Linearantriebs vorgegeben oder geändert werden.

Unter einer virtuellen Achse wird eine Vorgabe der Bewegung eines Läufers auf zumindest einem Segment verstanden. Eine virtuelle Achse kann auch durch die Bewegung eines Läufers anhand der Bewegung eines weiteren Läufers definiert sein. Beispielhaft sei hier die Bewegung eines Läufers vorgegeben. In Bezug auf die Bewegung des Läufers kann ein weiterer Läufer in einem einstellbaren Abstand hinterher bewegt werden. Eine virtuelle Achse weist Vorgaben für die Bewegung eines Läufers auf. Die virtuelle Achse kann sich auf die Bewegung eines Läufers über mehrere Segmente beziehen. Mit anderen Worten beschreibt eine virtuelle Achse die Beschreibung eines Läufers des Linearantriebs.

Eine Transformation eines Bewegungsablaufes in eine virtuelle Achse oder mehrere virtuelle Achsen erfolgt anhand einer Aufteilung der Bewegungsaufgabe auf die Läufer. Ein zusätzlicher Läufer kann sich an einer Bewegung von einem bereits vorhandenen Läufer und/oder einer virtuellen Achse zugeordneten Bewegung eines anderen Läufers orientieren. Beispiele für eine Orientierung der Bewegung sind ein beabstandeter Gleichlauf oder ein Nachlauf eines Läufers zu einem anderen Läufer sowie eine gegensätzliche Bewegung zweier Läufer.

Eine reale Achse weist in einer alternativen Ausgestaltung die Information über die Bewegung des Läufers auf, wobei die Bewegung des Läufers auf ein Segment bezogen ist. Eine reale Achse kann Vorgaben zu absoluten Größen, z. B. Geschwindigkeiten des Läufers an bestimmten Positionen oder zu bestimmten Zeiten, der Bewegung aufweisen. Die reale Achse dient vorteilhaft zur Beschreibung der Bewegung eines Läufers oder mehrere Läufer auf einem Segment.

Die virtuelle Achse entspricht einem Abbild der Bewegung des jeweiligen Läufers in der Steuereinrichtung oder in dem Computerprogrammprodukt. Die reale Achse entspricht dem Läufer auf dem Segment, insbesondere entspricht die reale Achse dem Befehlssatz, der mit Hilfe einer Steuereinheit und/oder einem Stromrichter bzw. Verstärker auf das entsprechende Segment übertragen wird. Mit anderen Worten kann eine reale Achse dem Befehlssatz zur Ansteuerung eines Segments, insbesondere zur Steuerung zumindest einen Läufer auf dem jeweiligen Segment, entsprechen. Zur Bereitstellung der virtuellen Achse an das Segment oder an die Steuereinheit dient vorteilhaft die Steuereinrichtung. Die Steuereinrichtung kann durch eine Recheneinheit ausgeführt sein und das Computerprogrammprodukt kann auf der Recheneinheit installiert sein. Das Computerprogrammprodukt kann überdies Teil eines Engineering-Programms sein.

Die Vorgabe für die reale Achse wird als Signal für die Steuereinheit bereitgestellt. Die Steuereinheit stellt für ein Segment eine Spannung bzw. einen Strom zur Verfügung. Anhand des Stromes bzw. der Spannung wird der Läufer auf dem Segment bewegt. Vorteilhaft dient eine Steuereinheit zur Steuerung der Bewegung eines Läufers auf einem Segment.

Eine Überführung der Vorgabe der virtuellen Achse in eine Vorgabe für zumindest eine reale Achse dient zur Bereitstellung von einem Signal für die Steuereinheit. Die Steuereinheit dient zur Steuerung eines Segmentes oder mehrerer Segmente. Die Überführung der Vorgabe von einer virtuellen Achse in zumindest eine reale Achse kann durch eine Übertragung oder Aufteilung der Vorgabe einer relativen Bewegung des Läufers in Vorgaben für die Steuereinheiten der einzelnen Segmente erfolgen.

In einer alternativen vorteilhaften Ausgestaltung kann die Überführung durch eine Matrix-Transformation erfolgen. Eine Matrix-Transformation weist als Eingangsgröße einen Vektor aus Bewegungsvorgaben oder virtuellen Achsen in einer Basis auf, wobei die Basis die Bewegung zumindest einen Läufers auf mehreren Segmenten definiert. Die Basis hat als Dimension die Anzahl der Läufer. Durch die Matrix-Transformation, die eine einfache Matrix-Multiplikation sein kann, wird die Vorgabe der Bewegung in eine andere Basis überführt. Die andere Basis hat als Dimension die Anzahl der Segmente. Die Matrix-Transformation muss nicht linear sein. Die Matrix-Transformation ist vorteilhaft von einem Positionsvektor der virtuellen Achse abhängig. Somit kann die Matrix-Transformation zu jedem Zeitpunkt eine lineare Transformation sein.

Die Steuereinrichtung für einen Linearantrieb weist einen Eingang für einen Bewegungsablauf eines Läufers auf. Die Steuereinrichtung weist weiter einen Ausgang für ein Signal auf, wobei das Signal zu einer Steuereinheit übertragen wird. Das Signal kann gemäß der realen Achse durch die Steuereinrichtung bereitgestellt werden. Die Steuereinrichtung ist zur Umwandlung eines vorgegebenen Bewegungsablaufs in Signale für die Steuereinheiten ausgebildet. Die Steuereirichtung kann als Computerprogramm ausgestaltet sein. Das Computerprogramm ist beim Ablauf auf einer Recheneinheit zur Umwandlung eines Bewegungsablaufs in Signale für die zumindest eine Steuereinheit ausgebildet.

Das Computerprogrammprodukt, insbesondere ein Projektgenerator oder ein Engineering-Programm dient zur automatisierten Ausführung des hier beschriebenen Verfahrens. Das Computerprogrammprodukt ist auf einer Recheneinheit installiert. Das Computerprogramm wird zur Ausführung in einen Arbeitsspeicher der Recheneinheit geladen und von dort von einem Prozessor (CPU) ausgeführt. Der Bewegungsablauf kann durch eine Datei vorgegeben sein oder von einer Maschinenstation einmal oder laufend (online-Funktionalität) von der Maschinenstation vorgegeben werden. Das Computerprogrammprodukt stellt Signale für die zumindest eine Steuereinheit bereit, wobei die Signale zur Steuerung der Bewegung der Läufer des Linearantriebs vorgesehen sind.

Gemäß einer bevorzugten Ausgestaltung wird der Bewegungsablauf anhand eines Verfahrens zur Ermittlung eines Bewegungsablaufs bereitgestellt. Bei dem Verfahren werden Stationen, die virtuelle Abbilder von vorgegebenen Maschinenstationen sind, vorgegeben und der jeweiligen Station ein Bewegungsprofil zugeordnet.

Weiter werden Segmente und Läufer, insbesondere durch deren Eigenschaften, vorgegeben. Zur Beschreibung der Bewegung der Läufer dienen Eingangsbedingungen und Ausgangsbedingungen als Parameter der Stationen. Die Stationen sind hier Abbilder von Maschinenstationen, wobei das jeweilige Bewegungsprofil der Station sich an der vorgesehenen Bewegung der Läufer in der Maschinenstation orientiert. So kann eine Bewegung der Läufer durch die Maschinenfunktionen analog eines Petri-Netzes vorgegeben werden. Der Projektgenerator überführt den Bewegungsablauf vorteilhaft in die Steuereinrichtung des Linearantriebs.

Der Linearantrieb weist zumindest ein Segment, zumindest einen Läufer, zumindest eine Steuereinheit sowie eine Steuereinrichtung auf. Der Läufer oder die Läufer sind zur Ausführung einer Bewegungsvorgabe auf den Segmenten vorgesehen. Zumindest ein Segment ist mit einer Steuereinheit verbunden. Die zumindest eine Steuereinheit ist mit der Steuereinrichtung verbunden. Die Steuereinrichtung ist zur Bereitstellung von Signalen an die Steuereinheit ausgebildet. Die Steuereinheit ist zur Steuerung des Läufers auf dem Segment vorgesehen. Das Segment kann einer Maschinenstation zugeordnet sein. Die Steuereinrichtung ist gemäß einem der Ansprüche 13 oder 14 ausgebildet.

Unter einer Produktionsmaschine wird allgemein eine Vorrichtung verstanden, die zur Bearbeitung eines Werkstücks oder von Gütern ausgebildet ist. Beispiele für eine Produktionsmaschine sind eine Spritzgießmaschine, eine Lackiermaschine oder eine Abfüllanlage.

Bei einer vorteilhaften Ausgestaltung des Verfahrens bildet die virtuelle Achse die Bewegung des Läufers auf einem Segment oder mehreren Segmenten ab.

Eine virtuelle Achse entspricht dem Abbild eines Läufers in einem Computerprogramm oder in der Steuereinrichtung. Die Abbildung der Läufer auf die virtuelle Achse erfolgt analog der Abbildung einer Maschinenstation auf die Station. Es können mehrere virtuelle Achsen zu einer virtuellen Achse gekoppelt werden. Die virtuelle Achse beschreibt die Bewegung des Läufers auf den Segmenten des Linearsystems unabhängig von der Aufteilung der Bewegung des Läufers oder der Läufer auf die einzelnen Segmente.

Beispielsweise kann sich die Bewegung eines Läufers an der Bewegung eines anderen Läufers orientieren, insbesondere über eine Mehrzahl von Segmenten hinweg.

So können komplexe Bewegungsabläufe in einfacher Art und Weise vorgegeben und bearbeitet werden.

Bei einer weiteren vorteilhaften Ausgestaltung des Verfahrens wird der Bewegungsablauf durch einen Benutzer vorgegeben.

Der Benutzer kann zur Eingabe des Bewegungsablaufs ein hierfür vorgesehenes Programm mit einer geeigneten Maske verwenden. Das Programm kann als Engineering-Programm, insbesondere der vorstehend ausgeführte Projektgenerator ausgebildet sein.

Hierbei ist es nicht erforderlich, dass der Benutzer den Bewegungsablauf direkt für die Steuereinrichtung vorgibt. Der Benutzer kann auch durch ein Netzwerk, wie das Internet oder ein Intranet mit der Steuereinrichtung in Verbindung stehen und den Linearantrieb fernsteuern. Der Bewegungsablauf kann auch durch ein Programm vorgegeben werden, wobei das Programm auf Prinzipien der künstlichen Intelligenz basieren kann.

Durch die Vorgabe des Bewegungsablaufs ist eine einfache und intuitive Steuerung des Linearantriebs möglich.

Bei einer weiteren vorteilhaften Ausgestaltung des Verfahrens werden einer virtuellen Achse mehrere reale Achsen zugeordnet.

Durch diese Zuordnung, die entweder in der Steuereinrichtung und/oder dem Computerprogrammprodukt zur Ermittlung des Bewegungsablaufs erfolgt, kann ein Übergang eines Läufers von einem Segment auf ein weiteres Segment beschrieben werden.

Eine solche Zuordnung tritt insbesondere bei Bewegungsabläufen über mehrere Segmente auf. Die realen Achsen können gekoppelt sein.

Durch die Zuordnung mehrerer realer Achsen zu einer virtuellen Achse ist ein besonders schwingungsarmer Übergang des Läufers von einem Segment zu einem anderen Segment möglich.

Die Zuordnung kann bei Bedarf dynamisch erfolgen. Dass heißt, dass einer bestimmten virtuellen Achse zu einem Zeitpunkt zwei reale Achsen zugeordnet sind und zu einem anderen Zeitpunkt eine oder mehrere andere reale Achsen. Die Zuordnung von zwei realen Achsen zu einer virtuellen Achse erfolgt bei einem Übergang eines Läufers von einem Segment auf ein anderes Segment.

Bei einer weiteren vorteilhaften Ausgestaltung des Verfahrens werden virtuelle Achsen gekoppelt.

Die Kopplung der virtuellen Achsen erfolgt vorteilhaft bei Abhängigkeiten der Bewegung der Läufer. Beispielhaft können mehrere Läufer einem Läufer hinterher bewegt werden. Die Kopplung virtueller Achsen kann eine Kopplung der Bewegung mehrerer Läufer des Linearantriebs abbilden. So können Läufer gruppiert bewegt werden. Unter einer gruppierten Bewegung wird beispielsweise eine beabstandete gleichförmige Bewegung einer Mehrzahl von Läufern verstanden. Hierbei kann ein erster Läufer die Bewegung vorgeben und die weiteren Läufer orientieren sich an der Bewegung des ersten Läufers.

Durch die Kopplung von virtuellen Achsen können insbesondere von einander abhängige Bewegungen einfach in der Steuereinrichtung verarbeitet werden.

Die Steuereinheit kann mit weiteren Steuereinheiten datentechnisch verbunden sein. Die Steuereinheiten können dabei sowohl direkt miteinander verbunden sein als auch über die Steuereinrichtung indirekt miteinander kommunizieren. Vorteilhaft sind die Steuereinheiten über eine schnelle Netzwerkverbindung, insbesondere über ein echtzeitfähiges Ethernet verbunden.

Durch die Zuordnung einer Steuereinheit zu einem Segment ist im Rahmen einer Steuerung eine besonders einfache Erweiterung eines bestehenden Linearantriebs möglich. Mit einem neu hinzutretenden Segment kann einfach eine neue Steuereinheit mit der Steuereinrichtung verbunden werden. So lässt sich der Linearantrieb einfach und kostengünstig erweitern und/oder an eine erweiterte Anlage anpassen.

Bei einer weiteren vorteilhaften Ausgestaltung des Verfahrens wird der Bewegungsablauf mit Hilfe eines Engineering-Systems, insbesondere durch eine Hochsprache, vorgegeben.

Als Hochsprache sind auch graphische Programmiersprachen vorteilhaft. Es können zudem graphisch-basierte Human-Machine-Interfaces (z.B. Virtual Reality) zum Einsatz kommen. Kennzeichnend für die Hochsprache können speziell an den Linearantrieb angepasste Befehle sein. So kann ein Befehl eine Station beschreiben, wobei der Befehl mit Parametern ausgeführt werden kann und/oder einen Verweis auf ein Bewegungsprofil zulässt.

Durch den Einsatz einer Hochsprache kann ein einmal vorgegebener Bewegungsablauf einfach modifiziert werden, ohne dass eine Einarbeitung in eine besondere Befehlsstruktur zur Vorgabe eines Bewegungsablaufs erforderlich ist.

Bei einer weiteren vorteilhaften Ausgestaltung des Verfahrens weist die Steuereinheit einen Stromrichter und/oder einen Verstärker auf. Die Steuereinheit dient dabei zur Stromversorgung des Segments.

Ein Stromrichter dient zur Bereitstellung einer elektrischen Spannung oder eines elektrischen Stroms mit einer vorgegebenen Frequenz. Falls das Segment den Aufbau eines Linearmotor-Stators aufweist, kann vorteilhaft eine handelsübliche Steuereinheit, wie ein SINAMIC der Firma Siemens AG zum Einsatz kommen.

Alternativ kann in einer weiteren vorteilhaften Ausgestaltung des Verfahrens der Bewegungsablauf zumindest teilweise von einer Maschinenstation vorgegeben werden.

Die Maschinenstation gibt bei dieser Ausgestaltung den Bewegungsablauf zumindest in dem Bereich des Linearantriebs vor, in dem die Läufer sich im Einflussbereich der Maschinenstation befinden.

Bei einer weiteren Vorteilhaften Ausgestaltung werden die Läufer von einem Förderband auf die Segmente übertragen und/oder die Läufer nach Durchlauf der Maschinenstationen von einem Förderband aufgenommen.

So können Bereiche, in denen keine besonders genaue Positionierung der Läufer benötigt wird, durch Förderbänder ersetzt werden. So lässt sich ein besonders preiswerter Linearantrieb aufbauen.

Unter einer Station wird ein Abbild einer Maschinenstation in der Steuereinrichtung oder dem Computerprogrammprodukt verstanden. Als Station wird hier zum Beispiel ein Abbild einer Produktionsmaschine verstanden. In dieser Ausführung steht die Station in einer Wirkverbindung mit dem Linearantrieb. Beispielsweise umfasst die Maschinenstation ein Abbild des Linearantriebs. Dann kann bei der Programmierung der Station die Vorgabe des Bewegungsablaufs integriert sein.

In einer weiteren vorteilhaften Ausgestaltung des Verfahrens wird der Bewegungsablauf des Läufers auf dem Segment, welches der Maschinenstation zugeordnet ist, von der Maschinenstation vorgegeben.

Durch diese Ausführung kann der Linearantrieb vorteilhaft unterscheiden, welche Segmente durch die Maschinenstation gesteuert oder geregelt werden und welche durch die Steuereinrichtung anhand der vorgegeben Bewegungsaufgabe gesteuert oder geregelt werden. Segmente sind dann der Maschinenstation zugeordnet, falls die Läufer in der Maschinenstation sich auf diesen befinden. Beispielhaft sind dies die Segmente unterhalb einer Fülleinrichtung oder einer Bestückungseinrichtung einer Abfüllanlage oder Verpackungsmaschine. Die Läufer dieser Segmente sind in den Betriebsablauf der Maschinenstation integriert. Daher erfolgt die Vorgabe des Bewegungsablaufs für die Läufer auf den Segmenten vorteilhaft von der Maschinenstation.

Die Zuordnung erlaubt eine vereinfachte Steuerung des Linearantriebs durch die Zuordnung ganzer Segmente zu der Maschinenstation.

In einer vorteilhaften Ausgestaltung weist der Linearantrieb mehrere Segmente auf, wobei ein Teil der Segmente der Maschinenstation zugeordnet ist und wobei die Maschinenstation den Bewegungsablauf dann vorgibt, wenn sich ein Läufer oder mehrere Läufer einem Einflussbereich der Maschinenstation zugeordnet sind.

Bei dieser Ausgestaltung bilden die Segmente, die der Maschinenstation zugeordnet sind, den Einflussbereich der Maschinenstation.

In einer weiteren vorteilhaften Ausgestaltung des Linearantriebs weist das jeweilige Segment sowohl Permanentmagnete als auch Spulen zur Erzeugung eines magnetischen Feldes auf, wobei das magnetische Feld mit dem Läufer wechselwirkt.

Dieses Prinzip ist auch unter dem Namen Symplex-Verfahren bekannt. Vorteilhaft benötigt ein Läufer eines Linearantriebs somit keine eigenen Permanentmagnete.

Durch die fehlenden Permanentmagnete verschmutzen die Läufer während des Betriebs des Lineartransports erheblich langsamer durch die fehlende Anziehungskraft auf magnetische Partikel wie Eisenspäne.

Im Folgenden wird die Erfindung anhand von Figuren näher beschrieben und erläutert. Die einzelnen Merkmale in den Figuren lassen sich durch den Fachmann zu weiteren Ausführungsbeispielen kombinieren, ohne den Rahmen der Erfindung zu verlassen. Es zeigen:
- FIG 1: einen schematischen Aufbau des Linearantriebs,
- FIG 2: eine weitere Ausführungsform des Linearantriebs,
- FIG 3: eine weitere Ausführungsform des Linearantriebs,
- FIG 4: einen möglichen Aufbau eines Funktionsmoduls,
- FIG 5: zwei Maschinenstationen und einen Linearantrieb.

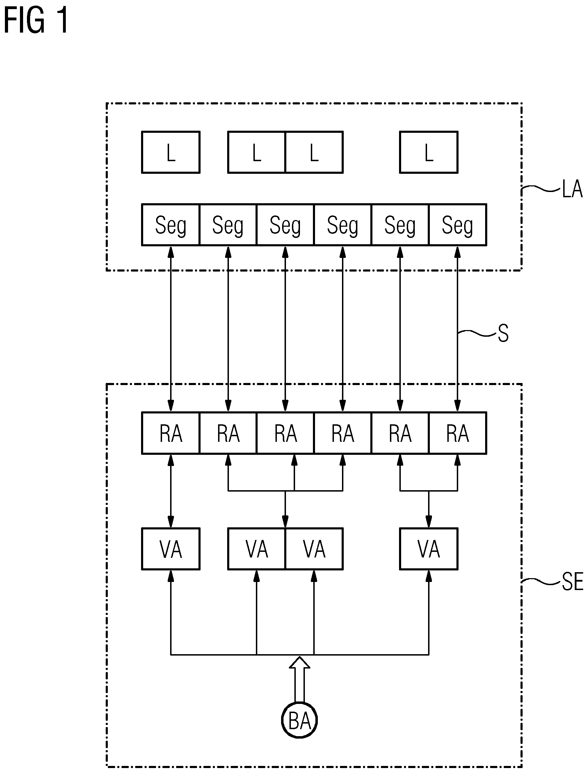

FIG 1 zeigt einen schematischen Aufbau des Linearantriebs LA. Der Linearantrieb LA weist eine Mehrzahl von Segmenten Seg auf, wobei auf den Segmenten Seg Läufer L angeordnet sind. Jedes Segment Seg wird einem Signal S angesteuert. Das Signal S geht in dieser Ausführung von einer Steuereinrichtung SE aus. Das Signal S umfasst vorteilhaft die Spannungsversorgung bzw. Stromversorgung des Segments Seg. Die Steuereinrichtung SE dient zur Steuerung der Bewegung der Läufer L auf den Segmenten Seg. Die Segmente Seg sind einander benachbart angeordnet und bilden eine Strecke, auf der die Läufer L bewegt werden. Bei den Segmenten Seg handelt es sich vorteilhaft um Statoren von Linearmotoren, die sequenziell benachbart angeordnet sind.

Die Steuereinrichtung SE dient zur Übertragung eines vorgegebenen Bewegungsablaufs BA in Signale S für die Segmente Seg. Der Bewegungsablauf BA wird in der Steuereinrichtung SE auf die virtuellen Achsen VA aufgeteilt. Dabei entspricht einer virtuellen Achse VA eine Bewegung eines zugeordneten Läufers L auf der Mehrzahl der Segmente. Die Bewegung des Läufers L ist also durch eine virtuelle Achse VA vorgegeben. Die virtuelle Achse VA dient zur Vorgabe der Bewegungsinformation an die realen Achsen RA, wobei die realen Achsen RA der Bewegung der Läufer L auf den einzelnen Segmenten Seg entsprechen. Jedem Segment Seg ist jeweils eine reale Achse RA zugeordnet.

Die Aufteilung der Bewegung der virtuellen Achse VA auf die realen Achsen RA erfolgt nach der Position des Läufers L zu einem Zeitpunkt sowie optional der vorgesehenen Position des Läufers L zu einem späteren Zeitpunkt.

Die Steuereinrichtung SE kann durch ein Computerprogrammprodukt ausgestaltet sein, wobei das Computerprogrammprodukt auf einer Recheneinheit installiert ist und auf der Recheneinheit ausgeführt wird. Die Kommunikation der Steuereinrichtung SE in Form eines Computerprogrammproduktes mit den einzelnen Segmenten Seg erfolgt vorteilhaft über eine herkömmliche Schnittstelle wie Ethernet, insbesondere eine echtzeitfähige Schnittstelle, und/oder eine sonstige datentechnische Verbindung.

Zur Spannungsversorgung bzw. Stromversorgung der Segmente Seg dienen vorzugsweise Treiberstufen, die von dem Computerprogrammprodukt angesteuert werden.

Bewegt sich ein Läufer L von einem Segment Seg auf ein benachbartes Segment Seg, dann ordnet die Steuereinrichtung SE für die Zeit des Übergangs des Läufers L der virtuellen Achse VA des Läufers die beiden realen Achsen RA zu, welche den beteiligten Segmenten zugeordnet sind. Bewegt sich der Läufer L dann weiter auf dem Segment Seg, so wird der virtuellen Achse VA diejenige reale Achse RA zugeordnet, auf welcher der Läufer sich nach dem Übergang bewegt.

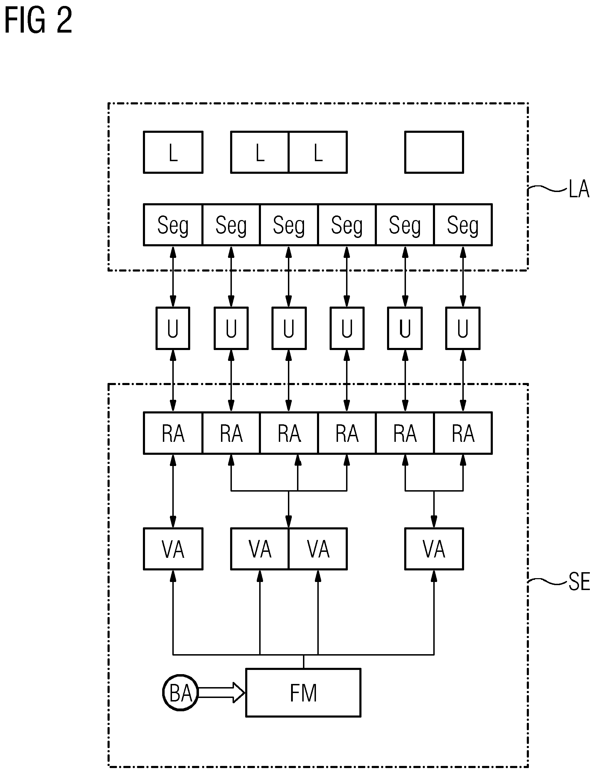

FIG 2 zeigt eine weitere Ausführungsform des Linearantriebs LA. Auch hier weist der Linearantrieb LA eine Steuereinrichtung SE, eine Mehrzahl von Segmenten Seg, auf denen eine Mehrzahl von Läufern L bewegt werden, auf. Die Steuereinrichtung SE ist mit einer Mehrzahl von Steuereinheiten U verbunden. Die Verbindung zwischen der Steuereinrichtung SE und der Steuereinheit U erfolgt durch eine datentechnische Verbindung. Die Steuereinrichtung überträgt Signale S zu den Steuereinheiten U. Jede Steuereinheit U ist weiter mit einem Segment Seg verbunden. Die Steuereinheit U dient zur Aufnahme der Bewegungsinformationen der Läufer auf dem zugeordneten Segment. Die Bewegungsinformation entspricht der Vorgabe einer realen Achse RA. Die Steuereinheit U weist entweder einen Verstärker oder einen Stromrichter auf. Der Stromrichter stellt einen Wechselstrom bzw. eine Wechselspannung für das Segment Seg bereit. Ein Verstärker stellt eine Gleichspannung für eine oder mehrere Spulen eines Segments Seg bereit.

Die Steuereinrichtung SE weist einen Eingang für einen Bewegungsablauf BA auf. Der Bewegungsablauf BA wird beispielsweise von einem Benutzer vorgegeben. Bevorzugt wird der Bewegungsablauf BA laufend neu ermittelt bzw. angepasst. Der Bewegungsablauf BA wird in ein Funktionsmodul FM übertragen. Das Funktionsmodul FM separiert die Bewegung der einzelnen Läufer L aus dem Bewegungsablauf BA. Der Bewegungsablauf eines einzelnen Läufers L wird einer virtuellen Achse VA zur Verfügung gestellt. Die virtuelle Achse VA überträgt die Information des Bewegungsablaufs BA auf die entsprechende reale Achse RA. Die Zuordnung der virtuellen Achse VA zu der zumindest einen realen Achse RA erfolgt entsprechend der Position des Läufers L auf dem Segment Seg. Die reale Achse RA ist eine Abbildung des Signals S für die realen Achse RA zugehörige Steuereinheit U. Bei einer Regelung der Bewegung des zumindest einen Läufers L erfolgt eine Positionsbestimmung des Läufers L. Die Position des Läufers L wird vorteilhaft an die Steuereinrichtung SE und/oder die Steuereinheit U zurückübertragen. Eine Ermittlung der Position oder der Geschwindigkeit des Läufers erfolgt durch zumindest einen Sensor. Der Sensor kann einem Segment zugeordnet sein. Der Rückübertrag der Position des Läufers L auf den Segmenten Seg an die Steuereinheit U und/oder der Steuereinrichtung SE wird durch die Richtung der Signale S in beiden Richtungen symbolisiert. Eine Zuordnung der virtuellen Achsen VA zu den realen Achsen RA erfolgt automatisiert und ohne das der Benutzer involviert sein muss.

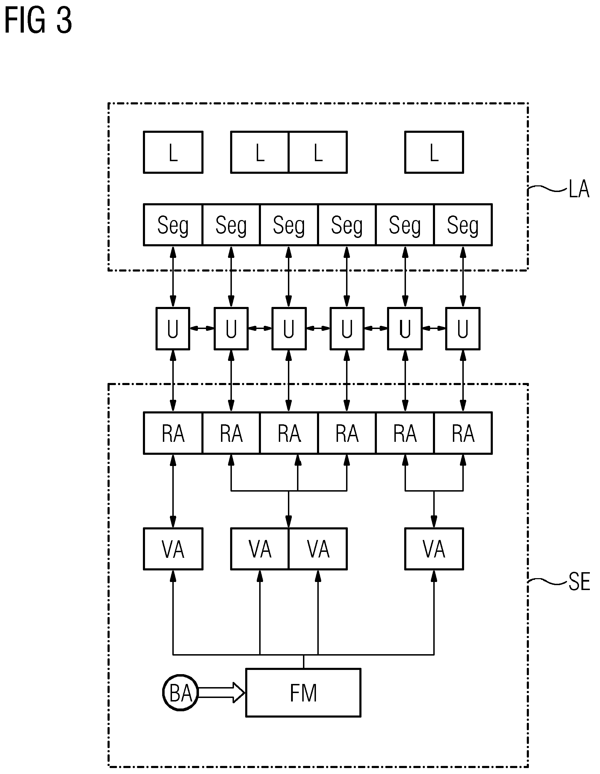

FIG 3 zeigt eine weitere Ausführungsform des Linearantriebs LA. Der Linearantrieb LA ist analog des Linearantriebs aus der FIG 2, wobei als weiteres Merkmal die Steuereinheiten U direkt miteinander kommunizieren. Die Kommunikation der Steuereinheiten U erfolgt durch eine technische Datenverbindung. Die technische Datenverbindung ist durch Doppelpfeile zwischen den Steuereinheiten U symbolisiert. Eine solche Datenverbindung kann eine, vorzugsweise echtzeitfähige, Netzwerkverbindung erfolgen. Die Kommunikation der Steuereinheit U dient zur Verminderung von Störeinflüssen bei einem Übergang eines Läufers L von einem Segment Seg auf ein benachbartes Segment Seg. Durch die Datenverbindung können Positionsdaten der Läufer auf den Segmenten Seg ausgetauscht werden.

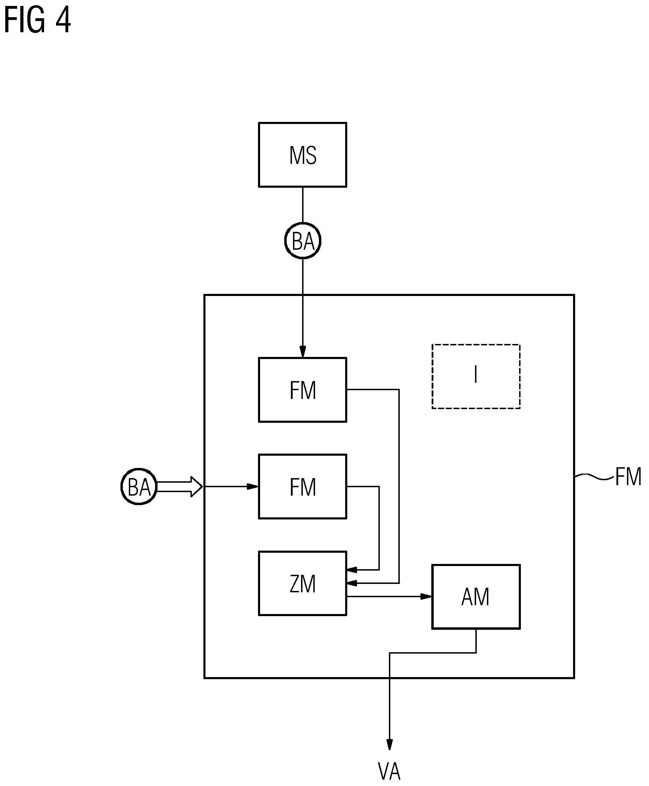

FIG 4 zeigt den möglichen Aufbau eines Funktionsmoduls FM. Das Funktionsmodul FM weist Eingänge einen Bewegungsablauf von einer Maschinenstation sowie einen Eingang für einen Bewegungsablauf BA, der von einem Benutzer vorgegeben ist, auf. Das Funktionsmodul FM weist zumindest ein Eingangsmodul EM für den Bewegungsablauf einer Maschinenstation MS auf. Das Funktionsmodul FM weist weiter ein Eingangsmodul EM für den Bewegungsablauf BA auf, der von dem Benutzer vorgegeben wird. Die Eingangsmodule EM sind mit einem Zwischenmodul ZM verbunden. Das Zwischenmodul ZM dient zur Feststellung einer Befehlshoheit für die Bewegungsabläufe der Läufer im Linearantrieb.
Unter einer Befehlshoheit wird verstanden, ob der vom Benutzer vorgegebene Bewegungsablauf BA oder ein von der Maschinenstation MS vorgegebene Bewegungsablauf BA Vorrang bei der Ausführung hat.

Das Zwischenmodul ZM überträgt denjenigen Bewegungsablauf BA, der die Befehlshoheit inne hat, auf ein Ausgangsmodul AM. Das Ausgangsmodul AM weist dem entsprechenden Bewegungsablauf BA die virtuelle Achse VA zu. Die Bewegungsabläufe BA für die entsprechende virtuelle Achse VA wird von dem Funktionsmodul FM an die virtuellen Achsen VA in der Steuereinrichtung SE bereitgestellt.

Für das richtige Datenformat der Bewegungsabläufe BA und/oder der Vorgaben für die virtuelle Achse VA weist das Funktionsmodul FM optional weitere Elemente, beispielhaft ein Interface I, auf. Das Funktionsmodul FM ist vorteilhaft Teil der Steuereinrichtung SE, wobei die Steuereinrichtung SE zur Steuerung der Bewegung des Linearantriebs LA vorgesehen ist. Das Funktionsmodul FM kann auch durch ein Teil des Computerprogrammprodukts ausgebildet sein und auf einer Recheneinheit ablaufen.

Vorteilhaft erfolgen eine Kommunikation der Steuereinrichtung mit den Steuereinheiten und/oder die Kommunikation der Steuereinheiten untereinander in Echtzeit. Weiter vorteilhaft weisen die Netzwerkverbindungen sowie die Steuereinrichtung und/oder die Steuereinheiten eine Fail-Safe-Option auf.

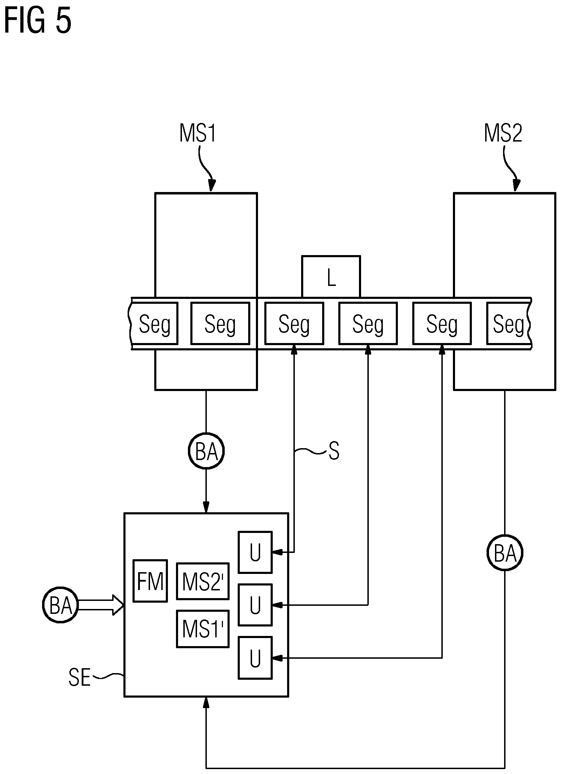

FIG 5 zeigt zwei Maschinenstationen MS1, MS2 und einen Linearantrieb LA. Der Linearantrieb LA verbindet die erste Maschinenstation MS1 und die zweite Maschinenstation MS2. Bei der ersten Maschinenstation MS1 kann es sich um eine Abfüllanlage und bei der zweiten Maschinenstation MS2 um eine Verpackungsmaschine handeln.

Der Läufer L dient zum Transport von Güter oder Werkstücke WS zwischen den Maschinenstationen MS1, MS2. Der Linearantrieb LA weist Segmente Seg, einen Läufer L und eine Steuereinrichtung SE auf.

Die Steuereinrichtung SE dient zur Steuerung oder Regelung des Läufers L auf den Segmenten Seg. Der Bewegungsablauf BA des Läufers L kann durch die erste Maschinenstation MS1, durch die zweite Maschinenstation MS2 und/oder von einem Benutzer vorgegeben werden.

Falls sich der Läufer L in einem Einflussbereich einer der Maschinenstationen MS1, MS2 befindet, stellt die entsprechende Maschinenstation MS1, MS2 den Bewegungsablauf BA für die Steuereinrichtung SE bereit. Die Steuereinrichtung SE steuert oder regelt die Bewegung des Läufers L auf den Segmenten Seg.

Der Einflussbereich der Maschinenstation MS1, MS2 auf den Läufer ist vorteilhaft durch eine Zuordnung von Segmenten Seg auf die Maschinenstation MS1, MS2 ausgeführt. So können einzelne Segmente Seg einer Maschinenstation MS1, MS2 zugeordnet sein. Die Maschinenstation MS1, MS2 gibt für die Segmente Seg, welche ihnen zugeordneten sind, den Bewegungsablauf BA vor.

Zwischen den Maschinenstation MS1, MS2 können die Läufer L abschnittsweise auch durch ein Förderband, anstelle von Segmenten Seg, ausgeführt sein. Auf einzelnen Segmenten Seg können sowohl gesteuert oder geregelte Bewegungen der Läufer L ausgeführt werden. Die Regelung erfolgt dabei vorteilhaft durch einen Sensor zur Positionsbestimmung des Läufers L auf dem geregelten Segment Seg. Als Regelgröße im geregelten Bereich dient vorteilhaft die Position des Läufers L oder die Geschwindigkeit des Läufers L.

Die Maschinenstation MS1, MS2 weist vorteilhaft Abbilder der Maschinenstation MS1', MS2' in der Steuereinrichtung SE auf. Die Steuereinrichtung SE ist in diesem Fall vorzugsweise als Computerprogrammprodukt ausgeführt. Das Computerprogrammprodukt weist die Abbilder der Maschinenstationen MS1', MS2' als Bausteine des Computerprogrammprodukt auf. Bei der Erstellung der Signale S für die Steuereinheiten U und/oder der Segmente Seg, dient ein Funktionsmodul FM zur Auswahl des Bewegungsablaufs BA. Entweder gibt ein Abbild der Maschinenstation MS1', MS2' oder der Benutzer den Bewegungsablauf BA für ein Segment vor. Vorteilhaft erfolgt die Auswahl des Bewegungsablaufs BA durch die Steuereinrichtung SE oder durch das Computerprogrammprodukt.

Zusammenfassend betrifft die Erfindung ein Verfahren zur Steuerung einer Bewegung von zumindest einem Läufer L bei einem Linearantrieb LA, eine Steuereinrichtung SE, einen Linearantrieb LA, eine Produktions- oder Verpackungsmaschine sowie ein Computerprogrammprodukt. Zur Vorgabe der Bewegung ist vorgesehen, dass ein Benutzer oder eine Maschinenstation den Bewegungsablauf BA der Steuereinrichtung SE vorgibt. Der vorgegebene Bewegungsablauf BA wird, insbesondere mit Hilfe des Computerprogrammproduktes, virtuellen Achsen VA zugeordnet. Die Aufteilung eines Bewegungsablaufes auf virtuelle Achsen VA erfolgt vorteilhaft automatisch. Die virtuellen Achsen VA werden in einem weiteren Schritt realen Achsen RA zugeordnet. Eine Steuereinheit U, insbesondere einem Umrichter, steuert die Bewegung des Läufers L auf dem Segment (Seg) des Linearantriebs LA. Die Steuereinheit U versorgt zumindest ein Segment Seg mit elektrischer Spannung bzw. Strom. Die Segmente Seg als Teil des Linearantriebs LA und bewegten somit die Läufer L anhand der Vorgaben des Bewegungsablaufs BA. Vorteilhaft erfolgt eine solche Zuordnung automatisiert und der Benutzer wird bei der Vorgabe des Bewegungsablaufs BA entlastet.

## Patentansprüche

1. Verfahren zur Steuerung einer Bewegung von zumindest einem Läufer (L) eines Linearantriebs (LA), wobei der Linearantrieb (LA) zumindest ein Segment (Seg) und den Läufer (L) aufweist, wobei das Verfahren zumindest folgende Schritte umfasst:
- Vorgabe eines Bewegungsablaufes (BA) für den Läufer (L),
- Transformation des Bewegungsablaufes (BA) des Läufers (L) in eine Vorgabe für eine virtuelle Achse (VA),
- Überführung der Vorgabe der virtuellen Achse (VA) in eine Vorgabe für eine reale Achse (RA) oder in eine Vorgabe für mehrere reale Achsen (RA),
wobei die Vorgabe für die zumindest eine reale Achse (RA) einer Steuereinheit (U) bereitgestellt wird und wobei die Steuereinheit (U) anhand der Vorgabe die Bewegung des Läufers (L) auf dem Segment (Seg) steuert.

2. Verfahren zur Steuerung und/oder Regelung einer Bewegung von Läufern (L) in einem Linearantrieb (LA), wobei der Linearantrieb (LA) zum Transport von Gütern oder Produkten in einer Maschinenstation (MS1, MS2) oder von einer Maschinenstation (MS1) zu einer weiteren Maschinenstation (MS2) ausgebildet ist, wobei zur Bewegung der Läufer (L) Segmente (Seg) vorgesehen sind, wobei eine Steuereinrichtung (SE) zur Steuerung oder Regelung der Bewegung der Läufer (L) auf den Segmenten (Seg) ausgebildet ist, wobei der Linearantrieb in der Steuereinrichtung durch folgende Zuordnungen ausgebildet ist:
- der jeweiligen Maschinenstation (MS1, MS2) ist jeweils eine Station (S1, S2) zugeordnet,
- dem jeweiligen Läufer (L) ist eine virtuelle Achse (VA) zugeordnet,
- dem jeweiligen Segment (Seg) ist eine reale Achse (RA) zugeordnet,
wobei das Verfahren folgende Verfahrensschritte umfasst:
- Vorgabe eines Bewegungsprofils (BP) für die jeweilige Station (S1, S2),
- Vorgabe von Eingangsbedingungen, insbesondere einer vorgesehenen Anzahl (N) von virtuellen Achsen (VA) für die jeweilige Station (S1, S2),
- Vorgabe einer Abfolge/Position von realen Achsen (RA),
- Steuerung oder Regelung der Läufer (L) des Linearantriebs (LA), wobei die Segmente (Seg) anhand der Vorgabe der realen Achsen (RA) gesteuert bzw. geregelt werden, wobei die realen Achsen (RA) aus der jeweiligen virtuellen Achse (VA) ermittelt werden, wobei die jeweilige virtuelle Achse (VA) aus dem jeweiligen Bewegungsprofil (BP) der Station (S1, S2) und/oder der Abfolge der durchlaufenen Stationen (S1, S2) ermittelt wird, wobei die Abfolge der Stationen (S1, S2)
- für einen Läufer (L) vorgegeben sein kann,
- und/oder sich derart ergibt, dass die virtuelle Achse (VA) dann einer Station (S1, S2) zugeordnet wird, wenn die Station (S1, S2) zur Aufnahme einer vorgesehenen Anzahl (N) von virtuellen Achsen (VA) bereit ist und die vorgesehene Anzahl (N) von virtuellen Achsen (VA) für die Station (S1, S2) zur Verfügung steht,
- wobei die virtuellen Achsen (VA), insbesondere gemäß einer vorgegebenen Reihenfolge, jeweils nacheinander den vorgegebenen Stationen (S1, S2) zugeordnet werden.

3. Verfahren nach Anspruch 1 oder 2, wobei die virtuelle Achse (VA) die Bewegung des Läufers (L) auf einem Segment (Seg) oder mehreren Segmenten (Seg) abbildet.

4. Verfahren nach einem der vorangehenden Ansprüche, wobei der Bewegungsablauf (BA) durch einen Benutzer vorgegeben wird.

5. Verfahren nach einem der vorangehenden Ansprüche, wobei der jeweiligen virtuellen Achse (VA) mehrere reale Achsen (RA) zugeordnet werden.

6. Verfahren nach einem der vorangehenden Ansprüche, wobei zumindest zwei der virtuellen Achsen (VA) gekoppelt werden.

7. Verfahren nach einem der vorangehenden Ansprüche, wobei die jeweilige reale Achse (RA) der jeweiligen Steuereinheit (U) zugeordnet wird und die Steuereinheit (U) das jeweilige Segment (Seg) steuert.

8. Verfahren nach einem der vorangehenden Ansprüche, wobei der Bewegungsablauf (BA) mit Hilfe eines Engineering-Systems, insbesondere durch eine Hochsprache, vorgegeben wird.

9. Verfahren nach einem der vorangehenden Ansprüche, wobei die Steuereinheit (U) einen Umrichter und/oder einen Verstärker aufweist und wobei die Steuereinheit (U) zur Stromversorgung des Segments (Seg) dient.

10. Verfahren nach einem der vorangehenden Ansprüche, wobei die Läufer (L) von einem Förderband auf die Segmente (Seg) übertragen werden und/oder die Läufer nach Durchlauf der Maschinenstationen (MS1, MS2) von einem Förderband aufgenommen werden.

11. Verfahren nach einem der vorangehenden Ansprüche, wobei der Bewegungsablauf (BA) des Läufers (L) auf dem Segment (Seg), welches der Maschinenstation (MS1, MS2) zugeordnet ist, von der Maschinenstation (MS1, MS2) vorgegeben wird.

12. Verfahren nach einem der vorangehenden Ansprüche, wobei der Linearantrieb (LA) mehrere Segmente (Seg) aufweist, wobei ein Teil der Segmente (Seg) der Maschinenstation (MS1, MS2) zugeordnet sind und wobei die Maschinenstation (MS1, MS2) den Bewegungsablauf (BA) dann vorgibt, wenn ein Läufer (L) oder mehrere Läufer (L) einem Einflussbereich der Maschinenstation (MS1, MS2) zugeordnet sind.

13. Steuereinrichtung (SE) für einen Linearantrieb (LA), mit einem Eingang für einen Bewegungsablauf (BA) eines Läufers (L) des Linearantriebs (LA), mit zumindest einem Ausgang für ein Signal (S) für zumindest eine Steuereinheit (U), wobei die Steuereinrichtung (SE) zur Umwandlung des Bewegungsablaufs (BA) in Signale (S) für die Steuereinheiten (U) ausgebildet ist.

14. Steuereinrichtung (SE) nach Anspruch 13, wobei die Steuereinrichtung (SE) zur Durchführung eines Verfahrens nach einem der Ansprüche 1 bis 12 ausgebildet ist.

15. Computerprogrammprodukt zur Installation und/oder Ausführung auf einer Recheneinheit, wobei das Computerprogrammprodukt zur Ausführung eines Verfahrens nach einem der Ansprüche 1 bis 12 ausgebildet ist.

16. Linearantrieb (LA), aufweisend ein oder mehrere Segmente (Seg), einen Läufer (L), zumindest eine Steuereinheit (U) sowie eine Steuereinrichtung (SE),
- wobei der Läufer (L) zur Ausführung einer Bewegungsvorgabe (BA) auf den Segmenten (Seg) vorgesehen ist,
- wobei das jeweilige Segment (Seg) mit der jeweiligen Steuereinheit (U) verbunden ist,
- wobei die zumindest eine Steuereinheit (U) mit der Steuereinrichtung (SE) verbunden ist,
- wobei die Steuereinrichtung (SE) zur Bereitstellung von Signalen für die jeweilige Steuereinheit (U) ausgebildet ist, die zur Steuerung des Läufers (L) auf dem jeweiligen Segment (Seg) vorgesehen sind,
- wobei das jeweilige Segment (Seg) optional einer Maschinenstation (MS1) zugeordnet ist,
wobei die Steuereinrichtung (SE) gemäß einem der Ansprüche 12 oder 13 ausgebildet ist.

17. Linearantrieb (LA) gemäß Anspruch 16, wobei das jeweilige Segment (Seg) sowohl Permanentmagnete als auch Spulen zur Erzeugung eines magnetischen Feldes aufweist und das magnetische Feld mit dem Läufer wechselwirkt.

18. Produktionsmaschine, Werkzeugmaschine oder Verpackungsmaschine, aufweisend eine Maschinenstation (MS1, MS2), wobei die Maschinenstation (MS1, MS2) mit einem Linearantrieb (LA) gemäß einem der Ansprüche 16 oder 17 verbunden ist.
